(19) Europäisches Patentamt
European Patent Office
Office européen des brevets

(11) EP 4 762 924 A1

## (12) EUROPEAN PATENT APPLICATION

(43) Date of publication:
24.06.2026 Bulletin 2026/26

(21) Application number: 25224269.8

(22) Date of filing: 17.12.2025

(51) International Patent Classification (IPC):
**A01N 25/24** (2006.01)

(52) Cooperative Patent Classification (CPC):
**A01N 25/24**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 18.12.2024 US 202463735322 P

(71) Applicant: **Kraton Polymers Nederland B.V.**
**1322 CE Almere (NL)**

(72) Inventors:
• **BRUCATO, Rebekah N.**
**Savannah, 31415 (US)**
• **WARMKESSEL, Jeffrey**
**Savannah, 31415 (US)**
• **NELSON, Lloyd A.**
**Savannah, 31415 (US)**

(74) Representative: **Henkel & Partner mbB**
**Patentanwaltskanzlei, Rechtsanwaltskanzlei**
**Maximiliansplatz 21**
**80333 München (DE)**

## (54) STICKER ADJUVANT FOR AGROCHEMICAL COMPOSITIONS

(57) This disclosure relates to sticker adjuvants for agricultural concentrate compositions and agricultural spray compositions. The sticker adjuvant comprises a sticker component including a mixture of a polyterpene oligomer and distilled tall oil (DTO), in combination with one or more surfactants and additional optional additives. The polyterpene oligomer comprises polymerized units of $\alpha$-pinene and $\beta$-pinene, and the DTO comprises fatty acids and rosin acids in amounts effective to reduce viscosity and enhance film formation. When incorporated into agricultural spray mixtures, the sticker adjuvant improves adhesion and rainfastness of active ingredients on plant surfaces.

EP 4 762 924 A1

**Description**

**FIELD**

The disclosure relates to the use of mixtures of polyterpene oligomer and distilled tall oil (DTO) in sticker adjuvants for agrochemical compositions.

**BACKGROUND OF THE INVENTION**

Adjuvants play an important role in agrochemical compositions by enhancing the delivery, retention, and performance of active ingredients such as herbicides, fungicides, and insecticides. Among the various types of adjuvants, stickers improve adhesion of agrochemical formulations to plant surfaces, helping active ingredients remain in place after rain, irrigation, or wind exposure. Improved adhesion reduces wash-off losses, enhances treatment reliability, and increases the effective utilization of agricultural chemicals under field conditions.

Polyterpenes are bio-based oligomers or resins derived from natural terpenes, valued for their strong adhesion, hydrophobicity, and biodegradability. These characteristics make polyterpenes attractive candidates for use in sticker adjuvants. However, polyterpenes can exhibit high viscosity, often greater than 2,000 cP at 50 °C, making them difficult to process, blend, pump, or uniformly disperse in aqueous agricultural spray systems. Conventional approaches to reduce polyterpene viscosity rely on organic solvents or high surfactant levels, which can increase formulation complexity, cost, flammability, and environmental impact.

Distilled tall oil (DTO), a renewable byproduct of the Kraft pulping process, contains a mixture of fatty acids and rosin acids that provide low viscosity, hydrophobicity, and natural film-forming capability. When blended with polyterpene oligomers, DTO acts as a compatible viscosity modifier and co-film forming agent. The DTO reduces the viscosity of the polyterpene component, enabling easier blending and application, while maintaining or enhancing the adhesion and water resistance properties of the resulting film.

There remains a need for bio-based sticker adjuvants that provide strong adhesion and rainfastness, reduced viscosity, and ease of formulation without reliance on synthetic solvents. The combination of polyterpene and distilled tall oil in defined ratios offers a simple and sustainable route to meet these needs.

**SUMMARY**

In one aspect, the disclosure relates to a sticker adjuvant. The sticker adjuvant composition comprises, based on the total weight of the composition, 50-100 wt.% of a mixture of polyterpene oligomer and distilled tall oil in a ratio of 1:4 to 4:1, 1-50 wt.% of a surfactant system, and 0-20 wt.% optional additives. The polyterpene oligomer comprises polymerized units of $\alpha$-pinene and $\beta$-pinene in a weight ratio of 4:1 to 19:1. The polyterpene oligomer has: a Mn of 320-375 Da, a Mw of 350-700 Da, a Mz of 400-800 Da, and a PDI of 1.10-1.5, as measured by gel permeation chromatography (GPC) in tetrahydrofuran (THF) using polystyrene calibration standards. The distilled tall oil comprises 40-90 wt.% fatty acids and 10-60 wt.% rosin acids. The distilled tall oil has: C18:1 fatty acid content of 2-30 wt.%, C18:2 fatty acid content of 2-20 wt.%, a conjugated linoleic content of 2-30 wt.%, an unsaturated fatty acid content of 10-75 wt.%, a pimaric acid content of 5-25 wt.%, a PAN and other abietic content of 5-25 wt.%, and a dehydroabietic acid and dihydroabietic acid content of 3-15 wt.%, as determined by fatty acid methyl ester (FAME) GC-FID analysis and GC-FID rosin acid analysis. The one or more additives are selected from the group of solvents, diluents, carriers, stabilizing agents, antioxidants, preservatives, biocides, pH modifiers, chelating agents, rheology modifiers, viscosity modifiers, freeze-point depressants, pour-point depressants, defoamers, antifoaming agents, additional surfactants, emulsifiers, wetting agents, drift-reduction agents, deposition aids, and combinations thereof. The sticker adjuvant when added to water in an amount of 0.25-3% v/v has a rainfastness adhesion % of at least 85%, or at least 88%, or at least 90%, as measured according to ASTM STP 1579.

In an aspect, the disclosure relates to an agricultural concentrate composition. The agricultural concentrate comprises 1-60 wt.% of an agricultural chemical, 0-20 wt.% of one or more additives, and 0.05-3% v/v of a sticker adjuvant. The sticker adjuvant composition comprises, based on the total weight of the composition, 50-100 wt.% of a mixture of polyterpene oligomer and distilled tall oil in a ratio of 1:4 to 4:1, 1-50 wt.% of a surfactant system, and 0-20 wt.% optional additives. The polyterpene oligomer comprises polymerized units of $\alpha$-pinene and $\beta$-pinene in a weight ratio of 4:1 to 19:1. The polyterpene oligomer has a Mn of 320-375 Da, a Mw of 350-700 Da, a Mz of 400-800 Da, and a PDI of 1.10-1.5, as measured by gel permeation chromatography (GPC) in tetrahydrofuran (THF) using polystyrene calibration standards. The distilled tall oil comprises 40-90 wt.% fatty acids and 10-60 wt.% rosin acids. The distilled tall oil has: C18:1 fatty acid content of 2-30 wt.%, C18:2 fatty acid content of 2-20 wt.%, a conjugated linoleic content of 2-30 wt.%, an unsaturated fatty acid content of 10-75 wt.%, a pimaric acid content of 5-25 wt.%, a PAN and other abietic content of 5-25 wt.%, and a dehydroabietic acid and dihydroabietic acid content of 3-15 wt.%, as determined by fatty acid methyl ester (FAME) GC-FID analysis and GC-FID rosin acid analysis. The one or more additives are selected from the group of solvents, diluents, carriers, stabilizing agents, antioxidants, preservatives, biocides, pH modifiers, chelating agents, rheology modifiers, viscosity modifiers, freeze-point depressants, pour-point depressants, defoamers, antifoaming agents, additional surfactants, emulsifiers, wetting agents, drift-reduction agents, deposition aids, and combinations thereof. The agricultural concentrate composition is configured to be diluted with water prior to use.

In an aspect, the agricultural concentrate composition is diluted with water to provide an agricultural spray composition comprising 0.25-3% v/v of the sticker adjuvant composition described above. The agricultural spray composition exhibits a rainfast adhesion percentage of at least 85%, or at least 88%, or at least 90%, as measured according to ASTM STP 1579.

**DESCRIPTION**

The following terms will have the following meanings:
"Consisting of" refers to a composition that includes only the specifically listed components and excludes other components that materially affect the technical solution or distinctive function of the invention. However, the presence of other components in small amounts that do not materially affect the technical effect of the invention is not excluded, such as trace-level stabilizers, process residues, or solvents used during preparation.

"Consisting essentially of" means that the composition primarily includes the recited components and may additionally contain one or more components that do not materially affect the novel characteristics or intended function of the invention. In embodiments, such additional components are present in amounts of < 30 wt.%, < 20 wt.%, or < 10 wt.%, based on total weight of the composition.

"At least one of A, B, and C" means one or more members selected from the group consisting of A, B, and C. Thus, it includes A only, B only, C only, A and B, A and C, B and C, and A, B, and C.

A list of embodiments recited as "A, B, or C" is interpreted to include A only, B only, C only, or any combination of two or more of A, B, and C, unless the context clearly indicates otherwise.

"Any of A, B, or C" means one member selected from A, B, and C.

If used, "any of A, B, and C" means one or more members selected from A, B, and C, and is intended to have the same scope as "at least one of A, B, and C.".

The number-average molecular weight (Mn), weight-average molecular weight (Mw), and z-average molecular weight (Mz) are determined by gel permeation chromatography (GPC), for example according to ASTM D5296, using tetrahydrofuran as the eluent and polystyrene calibration standards. Unless otherwise indicated, Mn, Mw, and Mz values reported herein are expressed in Daltons (Da).

$M_w$ is the molecular weight average distribution calculated according to:

$$M_w = \frac{\Sigma_i N_i M_i^2}{\Sigma_i N_i M_i}$$

where $N_i$ is the number of molecules of molecular weight $M_i$.

$M_n$ is the number average of the molecular weights, calculated according to:

$$M_n = \frac{\Sigma_i N_i M_i}{\Sigma_i N_i}$$

where $N_i$ is the number of molecules of molecular weight $M_i$.

$M_z$ is a higher order molecular weight average, or the third power molecular weight, which is calculated according to:

$$M_z = \frac{\Sigma_i N_i M_i^3}{\Sigma_i N_i M_i^2}$$

where $N_i$ is the amount of substance of species 1 and $M_i$ is the molecular weight of species i.

Polydispersity index (PDI) is calculated according to: PDI = $M_w/M_n$.

Tg (glass transition) can be determined according to ASTM D 6604.

Tsp (softening point) can be determined by ASTM E28, or a ring and ball, or ring and cup softening point tests.

Viscosity is measured at 25°C (unless otherwise indicated) according to ASTM D2196 using a rotational (Brookfield-type) viscometer.

GPC molecular weights can be measured against polystyrene calibration standards using a triple detector array and a mixed column set.

"Sticker" or "sticker component" refers to the mixture of polyterpene oligomer and distilled tall oil (DTO), prior to addition of any surfactant system or optional additives. The sticker component comprises, consists essentially of, or consists of, polyterpene oligomer and DTO. Sticker, when added to an agricultural composition, increases adhesion, retention, or resistance to wash-off when applied to plant or soil surfaces.

"Sticker adjuvant" or "Sticker adjuvant composition" refers to a formulated composition comprising the sticker component in combination with a surfactant system and optionally one or more additives, e.g., solvents, stabilizers, preservatives. The sticker adjuvant composition is formulated for incorporation into an agricultural concentrate composition or an agricultural spray composition.

"Agricultural composition" or "agrochemical composition" refers to any composition comprising an agricultural chemical, e.g., pesticide, growth regulator, micronutrient, fertilizer, etc., and the sticker adjuvant described herein.

"Agricultural concentrate composition" refers to a formulation comprising an agricultural chemical and the sticker adjuvant composition, provided in a concentrated form intended to be diluted with water prior to application. The agricultural concentrate composition is not sprayable in its supplied form and is configured for dilution in a spray tank or application vessel before use.

"Agricultural spray composition" refers to an agricultural composition that has been diluted with water to a sprayable form and is suitable for application using ground or aerial spray equipment.

"Rainfastness" refers to the measure of how well a substance, after application to a surface (such as a leaf surface), resists being washed away by rainfall or irrigation, and can be determined according to ASTM STP 1579.

The disclosure relates to a sticker adjuvant composition comprising, consisting essentially of, or consisting of a sticker component (mixture of polyterpene oligomer, distilled tall oil) in combination with a surfactant system and optional additives.

Sticker Component: The sticker component comprises a mixture of a polyterpene oligomer and distilled tall oil (DTO). In embodiments, the polyterpene oligomer and DTO are pre-blended prior to incorporation with the surfactant system or other components of the sticker adjuvant. The polyterpene oligomer to DTO weight ratio can be from 1:4 to 4:1, or 1:3 or 3:1.

In embodiments, the sticker component (mixture of polyterpene oligomer and DTO) has a viscosity of 100-3,000 cP, or 200-3,000 cP, or 200-2,750 cP, or 500-3,000 cP, or 800-3,000 cP, or 1,000-2,800 cP, or < 3,500 cP, or < 3,000 cP, or > 200 cP, or > 1,000 cP, measured at 25°C in accordance with ASTM D2196.

In embodiments, the sticker component has an acid value of 60-140 mg KOH/g, or 70-110 mg KOH/g. The acid value of distilled tall oil (DTO), the polyterpene oligomer, and the sticker blends were determined in accordance with ASTM D465.

In embodiments, the sticker component has a non-volatile content of 96-100 wt.%, or 97-99.5 wt.%, determined using ASTM E2043 or a modified version thereof.

In embodiments, the sticker component is present in the sticker adjuvant in an amount of 50-100 wt.%, or 50-95 wt.%, 55-95 wt.%, or 60-95 wt.%, based on the total weight of the sticker adjuvant, with the balance comprising one or more surfactants and/or optional additives.

In embodiments, sticker adjuvant containing the sticker component is added to agricultural compositions, in amount of 0.05-3% v/v, 0.05-2% v/v, or 0.75-2% v/v, or 0.25-3% v/v, or 0.3-2.5% v/v, or 0.5-2% v/v, based on the total weight of the agricultural composition (as diluted with water).

Method of Making the Sticker Component: A method of making a sticker component comprises combining a polyterpene oligomer and distilled tall oil (DTO) in a weight ratio of 1:4 to 4:1, 1:3, or 3:1, and mixing the components at 20-80 °C, or 25-60 °C, until a homogeneous blend is obtained. In embodiments, mixing is performed under low-to-moderate shear using a mechanical stirrer. The resulting mixture forms the sticker component.

Polyterpene Oligomer: The polyterpene oligomer may be prepared by cationic polymerization of one or more monoterpenes selected from α-pinene, β-pinene, delta-3-carene, limonene, dipentene, β-phellandrene, and pyrolysates of α-pinene, β-pinene, delta-3-carene, delta-2-carene, turpentine, dipentene, and limonene, or combinations thereof. The polymerization can be conducted in the presence of a Lewis acid catalyst such as boron trifluoride etherate ($BF_3 \cdot Et_2O$), aluminum chloride, or titanium tetrachloride, in an inert organic solvent such as toluene or heptane at a temperature of -40 °C to 0 °C, followed by neutralization and solvent removal. In embodiments, the polyterpene oligomer has a degree of polymerization of ≤10, or 2-10, or 3-9. Reaction time and catalyst concentration may be adjusted to control conversion and molecular weight distribution. The resulting polyterpene oligomer is typically a low-molecular-weight, light-colored, tacky material suitable for use as a film-forming component in sticker adjuvants.

In embodiments, the polyterpene oligomer is derived from terpene feedstocks comprising > 80 wt.%, or > 85 wt.%, or > 90 wt.%, or 85-95 wt.%, or 90-95 wt.%, or 90-92 wt.% α-pinene; with the remainder being β-pinene and, optionally, myrcene. In embodiments, polyterpene oligomer comprises polymerized units of α-pinene and β-pinene in a

weight ratio of $\alpha$-pinene to $\beta$-pinene ranging from 4:1 to 19:1, or 17:3 to 19:1, or 9:1 to 19:1, or 4:1 to 20:1. The polyterpene oligomer can further comprise up to 5 wt.% polymerized units of myrcene.

In embodiments, the polyterpene oligomer comprises:

monomers in an amount of < 5 wt.%, or < 3 wt.%, or < 1 wt.%, or > 0 wt.%, 0.1-5 wt.%, or 0.1-3 wt.%, or 0.1-2.5 wt.%, or 0.1-1 wt.%,
dimers in an amount of 25-55 wt.%, or 25-50 wt.%, or 30-40 wt.%, or 31-45 wt.%, or 35-40 wt.%,
trimers in an amount of 10-35 wt.%, or 15-30 wt.%, or 20-30 wt.%, or 20-25 wt.%,
tetramers in an amount of 5-30 wt.%, or 5-25 wt.%, or 10-25 wt.%, or 10-20 wt.%, or 15-20 wt.%, and
pentamers and higher oligomers in an amount of 10-40 wt.%, or 10-30 wt.%, or 15-30 wt.%, or 20-25 wt.%, based on the total weight of the polyterpene oligomer. The monomer and oligomer distributions are determined by gel permeation chromatography (GPC).

In embodiments, the polyterpene oligomer has one or more of the following molecular characteristics, determined by GPC:

a number-average molecular weight (Mn) of 320-375 Da, or 340-355 Da, or 345-355 Da;
a weight-average molecular weight (Mw) of 350-700 Da, or 350-600 Da, or 375-550 Da, or 400-500 Da, or 420-475 Da;
a Mz of 400-800 Da, or 500-700 Da, or 550-650 Da; and
a polydispersity index (PDI = Mw/Mn) of 1.10-1.5, or 1.15-1.4, or 1.20-1.35, or 1.20-1.3, or 1.24-1.28.

In embodiments, the polyterpene oligomer has an acid value of < 1 mg KOH/g, or < 0.5 mg KOH/g, or from 0.05-0.5 mg KOH/g, measured in accordance with ASTM D465, indicating minimal residual carboxylic or resin acid content.

In embodiments, the polyterpene oligomer has a hydroxyl value of < 20 mg KOH/g, or < 10 mg KOH/g, or from 1-10 mg KOH/g, measured in accordance with ASTM D4274.

In embodiments, the polyterpene oligomer has a viscosity of > 2,000 cP, or > 3,000 cP, or > 4,000 cP, or 2,000-15,000 cP, or 3,000-15,000 cP, or 2,000-12,000 cP, or 2,000-8,000 cPs, or 2,000-7,000 cPs, or 3,000-6,000 cPs, or 4,000-5,000 cPs, measured at 50 °C using a rotational (Brookfield) viscometer in accordance with ASTM D2196.

In embodiments, the polyterpene oligomer has a Tsp (softening point) of 15-35°C, 20-30°C, or 22-28°C, measured per ASTM E28-18.

In embodiments, the polyterpene oligomer has a Tg (glass transition) temperature of -25 to -5°C, or -25 to -10°C, or -25 to -15°C, or -23 to -18°C, measured with Differential Scanning Calorimetry per ASTM E1356.

In embodiments, the polyterpene oligomer has a Gardner color from < 10, or < 6, or 0-10, or 0-6, per ASTM D1544.

In embodiments, the polyterpene oligomer is hydrogenated or unhydrogenated. Hydrogenation can reduce color and odor and improve oxidative stability without substantially altering the molecular weight distribution. In embodiments, hydrogenation increases the glass transition temperature (Tg) by 1-5°C and reduces Gardner color by 1-4 units compared to the unhydrogenated form. Hydrogenation can be carried out using a supported metal catalyst such as nickel, palladium, or platinum under hydrogen pressure of 0.5-5 MPa and temperatures of 150-250 °C.

Distilled Tall Oil ("DTO"): Distilled tall oil is a bio-based mixture derived from the distillation of crude tall oil (CTO), typically containing a blend of fatty acids (C8-C26 linear or branched carboxylic acids) and rosin acids (C20 tricyclic monocarboxylic acids). In embodiments, DTO comprises fatty acids in amounts of 40-90 wt.%, or 50-87 wt.%, 55-80 wt.%, or 60-75 wt.%, or < 90 wt.%, or < 80 wt.%, or > 40 wt.%, or > 50 wt.%, or > 60 wt.%, or > 70 wt.%, and rosin acids in amounts of 10-60 wt.%, or 15-55 wt.%, or 15-50 wt.%, or 20-45 wt.%, or 25-40 wt.%, or > 10 wt.%, or > 13 wt.%, or > 15 wt.%, or > 20 wt.%, or > 25 wt.%, or < 60 wt.%, or < 55, wt.%, or < 50 wt.%, or < 45 wt.%, or < 40 wt.%, based on the total weight of the DTO. The DTO can be a mixture/blend of fatty acids and rosin acids or can be obtained directly as output from the distillation / purification process of crude tall oil (CTO), e.g., not a physical mixture/blend of bio-based fatty acids and rosin acids.

Bio-based fatty acids can include aliphatic C8 to C26 carboxylic acids derived from renewable sources. Examples include oleic acid, lauric acid, linoleic acid, linolenic acid, palmitic acid, stearic acid, riccinoleic acid, myristic acid, arachidic acid, behenic acid and mixtures thereof. Bio-based fatty acids can be sourced from tall oil or from various vegetable oils such as linseed (flaxseed) oil, castor oil, tung oil, soybean oil, cottonseed oil, olive oil, canola oil, corn oil, sunflower seed oil, peanut oil, coconut oil, safflower oil, palm oil and mixtures thereof, using known saponification or distillation techniques.

Rosin acids include rosins and rosin derivatives obtained from tall oil rosin, gum rosin, or wood rosin, as well as dimerized rosins or polymerized rosins. Examples include abietic acid, neoabietic acid, dehydroabietic acid, dihydroabietic acid, pimaric acid, levopimaric acid, sandaracopimaric acid, isopimaric acid, and palustric acid. Natural rosin typically comprises a mixture of abietic-type and pimaric-type acids in combination with minor amounts of other components. In addition to rosin acids with one carboxylic acid functionality, rosin acids with two or more carboxylic acid functionalities are also considered as rosin acids.

In embodiments, DTO has a C18:1 fatty acid content of 2-30 wt.%, or 2-25 wt.%, or 2-23 wt.%, or > 1 wt.%, or > 2 wt.%, or < 30 wt.%, or < 25 wt.%, based on the total weight of the DTO. "C18:1 fatty acids" include oleic acid together with positional and geometric C18:1 isomers.

In embodiments, DTO has an oleic acid content of 10-30 wt.%, or 10-25 wt.%, or 12-25 wt.%, or > 10 wt.%, or > 12 wt.%, or < 30 wt.%, or < 25 wt.%, based on the total weight of the DTO.

In embodiments, DTO has a C18:2 fatty acid content of 1-20 wt.%, or 2-20 wt.%, or 2-15 wt.%, or 5-15 wt.%, or > 1 wt.%, or > 2 wt.%, or > 3 wt.%, or > 4 wt.%, or > 5 wt.%, or > 6 wt.%, or < 20 wt.%, or < 17 wt.%, or < 15 wt.%, or < 13 wt.%, based on the total weight of the DTO. "C18:2 fatty acids" include linoleic acid together with other C18:2 isomers.

In embodiments, DTO has a linoleic acid content of 2-20 wt.%, or 2-15 wt.%, or 5-15 wt.%, or > 2 wt.%, or > 3 wt.%, or > 4 wt.%, or > 5 wt.%, or > 6 wt.%, or < 20 wt.%, or < 17 wt.%, or < 15 wt.%, or < 13 wt.%, based on the total weight of the DTO.

In embodiments, DTO has an oleic acid to linoleic acid ratio of 0.5 to 2.0, or 0.6 to 1.7, or 0.7 to 1.5, or > 0.5, or > 0.6, or < 2.0, or < 1.7.

In embodiments, DTO has a conjugated linoleic content of 2-30 wt.%, or 2-25 wt.%, or 2-20 wt.%, or 2-15 wt.%, or 5-15 wt.%, or > 2 wt.%, or > 3 wt.%, or > 5 wt.%, or < 30 wt.%, or < 28 wt.%, or < 25 wt.%, or < 20 wt.%, or < 15 wt.%, based on the total weight of the DTO.

In embodiments, DTO has an unsaturated fatty acid content of 10-75 wt.%, or 15-75 wt.%, or 15-65 wt.%, or 20-65 wt.%, or 40-75 wt.%, or 55-75 wt.%, or > 10 wt.%, or > 15 wt.%, or > 20 wt.%, or > 40 wt.%, or > 45 wt.%, or > 50 wt.%, or > 55 wt.%, or < 75 wt.%, or < 70 wt.%, based on the total weight of the DTO.

In embodiments, DTO has a pimaric acid content of 5-25 wt.%, or 5-15 wt.%, or 5-10 wt.%, or 5-8 wt.%, or > 5 wt.%, or > 7 wt.%, or < 25 wt.%, or < 20 wt.%, or < 15 wt.%, or < 12 wt.%, or < 10 wt.%, based on the total weight of the DTO.

In embodiments, DTO has a PAN and other abietic content of 5-25 wt.%, or 5-15 wt.%, or 5-12 wt.%, or 6-12 wt.%, or > 5 wt.%, or > 6 wt.%, or > 7 wt.%, or < 25 wt.%, or < 20 wt.%, or < 15 wt.%, or < 12 wt.%, based on the total weight of the DTO. "PAN" refers to isomers with two double bonds, such as palustric, abietic, and neoabietic acids. "Abietic" refers to other abietic-type rosin acids, such as 8, 15-abietic acid.

In embodiments, DTO has a dehydroabietic acid and dihydroabietic acid content of 3-15 wt.%, or 3-10 wt.%, or 3-6 wt.%, or > 3 wt.%, or > 4 wt.%, or < 15 wt.%, or < 13 wt.%, or < 10 wt.%, or < 8 wt.%, or < 6 wt.%, based on the total weight of the DTO.

In embodiments, DTO has an acid value of > 150, or > 160, or > 170, or < 200, or < 190, or 150-200, or 150-195, or 160-195, or 170-190 mg KOH/g, as measured using ASTM D465.

In embodiments, DTO has a Gardner Color of < 15, or < 10, or < 8, or > 0.1, or > 1, or 0-15, or 0-10, or 0.1-15, or 0.1-10, or 1-15, or 1-10, or 5-10, according to ASTM D1544.

In embodiments, DTO has a viscosity of > 50 cP, or > 75 cP, or > 100 cP, or < 600 cP, or 50-600 cP, or 100-600 cP, measured at 25°C according to ASTM D2196.

DTO serves as a low-viscosity, hydrophobic, film-forming component that is miscible with the polyterpene oligomer and acts as a compatible viscosity modifier and co-film former in the sticker adjuvant composition.

<u>Surfactant System:</u> In addition to the blend of polyterpene oligomer and DTO, the sticker adjuvant further contains a surfactant system. In embodiments, the surfactant system is included in the sticker adjuvant itself and/or in the agricultural composition itself. The surfactant system can comprise a single surfactant, or a mixture of two or more surfactants selected from nonionic, anionic, cationic, amphoteric surfactants, and mixtures thereof. In embodiments, the surfactant is at least a nonionic surfactant or an anionic surfactant. In embodiments, the surfactant is at least a nonionic surfactant.

In embodiments, the nonionic surfactant comprises, consists essentially of, or consists of ethoxylates, fatty acid derivatives, block copolymers, alkyl polyglucosides, and mixtures thereof.

In embodiments, the nonionic surfactant is an ethoxylate selected from the group of alcohol ethoxylates, fatty alcohol ethoxylates, alkylphenol ethoxylates, fatty acid ethoxylates, ethoxylated amines, and mixtures thereof. Examples include nonoxynol-9, lauryl alcohol ethoxylates, octaethylene glycol monododecyl ether, pentaethylene glycol monododecyl ether, nonylphenol ethoxylates, octylphenol ethoxylates, nonoxynol, Triton X-100, stearic fatty acid ethoxylates, oleic fatty acid ethoxylates, lauryl fatty acid ethoxylates, polyethoxylated tallow amine, cocoamine ethoxylates, tallowamine ethoxylates, and mixtures thereof. In embodiments, when the ethoxylate is a nonylphenol ethoxylate, the degree of ethoxylation ranges from 1-40, or 1-30, or 1-20, or 2-10 moles of ethylene oxide per mole of nonylphenol.

In embodiments, the nonionic surfactant is fatty acid derivative selected from the group of fatty acid amides, fatty acid esters of glycerol, fatty acid esters of sorbitol, fatty acid esters of sucrose, and mixtures thereof. Examples include cocamide monoethanolamine, cocamide diethanolamine, glycercol monostearate, glycerol monolaurate, sorbitan monolaurate, sorbitan monostearate, sorbitan tristearate, sucrose stearate, sucrose palmitate, sucrose laurate, sucrose cocoate, sucrose oleate, sucrose myristate, sucrose behenate, and mixtures thereof.

In embodiments, the nonionic surfactant is a block copolymer surfactant selected from the group of poloxamers, tetronics, polysorbates, PEG (polyethylene glycol) copolymers, PPG (polypropylene glycol) copolymers, PEG-PPG copolymers, PEG-polyester block copolymers, and mixtures thereof. Examples include ethylene oxide/propylene oxide block copolymers, block copolymers consisting of PEG and sorbitan esters, copolymers of alternating PEG and PPG units, copolymers of PEG blocks linked with polyester blocks (such as polycaprolactone or polylactic acid), and mixtures thereof.

In embodiments, the nonionic surfactant is an alkyl polyglucosides selected from the group of alkyl polyglucosides (such as decyl glucoside, lauryl glucoside and octyl glucoside).

In embodiments, the anionic surfactant is selected from sulfate, sulfonate, phosphate and carboxylate surfactants, in free acid form or in neutralized salt form (e.g., ammonium, amine, magnesium, potassium and sodium salts). Examples include: alkyl sulfates (such as sodium lauryl sulfate and sodium dodecyl sulfate); alkyl ether sulfates (such as sodium laureth sulfate and sodium myreth sulfate); sulfosuccinates (such as sodium dioctyl sulfosuccinate); alkylbenzene sulfonates (such as dodecylbenzene sulfonate and dodecyl diphenyl ether disulfonate); aryl-alkyl ether phosphates; alkyl ether phosphates; alkyl carboxylates (such as sodium stearate, sodium laurate, and sodium lauroyl sarcosinate), and mixtures thereof. Alpha-olefin sulfonates and secondary alkane sulfonates can also be used.

In embodiments, the cationic surfactant is selected from quaternary ammonium compounds and pH-dependent primary, secondary or tertiary amines, optionally in neutralized salt form (e.g., chloride or bromide salts). Examples include behentrimonium chloride, benzalkonium chlorides (BAC) including dimethylbenzyl ammonium chloride, cetalkonium chloride (CKC) and stearalkonium chloride, benzethonium chloride, benzododecinium chloride, carbethopendecinium bromide, cetrimonium bromide (CTAB), cetrimonium chloride (CTAC), cetylpyridinium chloride (CPC), didecylmethylammonium chloride, dimethyldioctadecylammonium bromide (DODAB), dimethyldioctadecylammonium chloride, domiphen bromide, octenidine dihydrochloride, thonzonium bromide, and mixtures thereof.

In embodiments, amphoteric surfactants contain both acidic and basic groups and can act as anionic or cationic groups, depending on pH. Examples include alkyl amine oxides such as lauramine oxide and myristamine oxide; betaines such as cocamidopropylbetaine; hydroxysultaines such as lauramidopropyl hydroxysultaine, cocamidopropyl hydroxysultaine, oleimidopropyl hydroxysultaine, tallowamidopropyl hydroxysultaine, erucamidopropyl hydroxysultaine, and lauryl hydroxysultaine; amphoacetates such as sodium lauramphoacetate; and mixtures thereof.

In embodiments, the surfactant system is present in a sticker adjuvant in an amount of 1-50 wt.%, or 5-50 wt.%, or 5-45 wt.%, or 5-40 wt.%, based on the total weight of the sticker adjuvant.

Optional Additives: In embodiments, the sticker adjuvant composition, the agricultural concentrate composition, and/or the agricultural spray composition further comprises one or more optional additives. Such additives may be present at one or more stages of formulation and may be selected to facilitate processing, storage stability, dilution with water, compatibility with agricultural chemicals, handling, or application performance.

Suitable additives include, without limitation, solvents, diluents, carriers, stabilizing agents, antioxidants, preservatives, biocides, pH modifiers, chelating agents, rheology modifiers, viscosity modifiers, freeze-point depressants, pour-point depressants, defoamers, antifoaming agents, additional surfactants, emulsifiers, wetting agents, drift-reduction agents, deposition aids, and combinations thereof, provided that such additives do not materially interfere with the adhesion performance of the sticker adjuvant.

In embodiments, the optional additives are present in an amount of 0-30 wt.%, or 1-30 wt.%, or 1-20 wt.%, or 1-10 wt.%, or 1-5 wt.%, based on the total weight of the sticker adjuvant composition and/or the agricultural concentrate composition.

Method of Making Sticker Adjuvant: In embodiments, a method of making a sticker adjuvant comprises: providing 50-100 wt.%, or 50-95 wt.%, 55-95 wt.%, or 60-95 wt.% of the sticker component, 1-50 wt.%, or 5-50 wt.%, or 5-45 wt.%, or 5-40 wt.% of a surfactant system, and 0-30 wt.%, or 1-30 wt.%, or 1-20 wt.%, 1-10 wt.%, or 1-5 wt.% of optional additives, and mixing the components at ambient temperature or 20-60°C until uniform. In embodiments, the surfactant is added to the sticker component slowly under agitation to promote compatibility and prevent phase separation.

Properties of Sticker Adjuvant: In embodiments, when diluted in water for agricultural application at 0.25-3% v/v, or 0.25-2% v/v, or 0.5-1.5% v/v, or 0.5-1% v/v, the sticker adjuvant provides a rainfastness adhesion of greater than 80%, greater than 85%, or greater than 90%, as determined according to ASTM STP 1579 or a comparable rainfastness test.

In embodiments, the sticker adjuvant provides a rainfastness adhesion that is at least 2% greater, or at least 5% greater, or at least 2-15% greater, at least 5-12% greater, or at least 6-14% greater than a corresponding composition containing polyterpene oligomer alone (without DTO), when tested under identical conditions.

In embodiments, the sticker adjuvant has a viscosity of 50-3,000 cP, 50-2,500 cP, measured at 25 °C in accordance with ASTM D2196.

Agricultural Concentrate Compositions: In embodiments, the sticker adjuvant composition and one or more agricultural chemicals are present in an agricultural concentrate composition. The agricultural concentrate composition is formulated as a concentrated product configured to be diluted with water prior to application, such as in a spray tank or application vessel. The agricultural concentrate composition may be provided as a liquid formulation and may further comprise one or more formulation components commonly used in agricultural concentrates, including solvents, carriers, surfactants, stabilizers, or diluents, provided that such components do not materially interfere with the performance of the sticker adjuvant.

In embodiments, the sticker adjuvant composition is present in the agricultural concentrate composition in an amount of from 0.1 to 20 wt.%, or 0.25-15 wt.%, or 0.5-12 wt.%, or 0.5-10 wt.%, or 1-10 wt.%, or 1-8 wt.%, based on the total weight of the agricultural concentrate composition. In embodiments, the agricultural chemical is present in an amount of from 1 to 60 wt.%, or 2-50 wt.%, or 5-45 wt.%, or 5-40 wt.%, or 10-40 wt.%, or 15-35 wt.%, based on the total weight of the agricultural concentrate composition. Upon dilution of the agricultural concentrate composition with water, an agricultural spray composition is obtained that is suitable for application to plants, soil, seeds, or other agricultural substrates.

Methods for Making and Applying Agricultural Spray Composition: In embodiments, a method for making an agricultural spray composition comprises admixing water, an agricultural chemical, and the sticker adjuvant at 0.05-3% v/v, 0.05-2% v/v, 0.25-3% v/v, or 0.5-2% v/v, based on the total weight of the agricultural composition.

In embodiments, a method for applying an agricultural composition comprises preparing the agricultural spray composition and applying the composition to a target surface or area using spray application equipment known in the art, including but not limited to ground-based sprayers, nozzle or boom sprayers, air-blast sprayers, drone or unmanned aerial systems, and manned aerial spraying systems.

The agricultural composition can be supplied in concentrated form or may be diluted with water at the point of use to create an agricultural spray composition.

Applications: The sticker adjuvant compositions can be used in a wide range of agricultural and horticultural spray applications, including application to seeds, soil, foliage, roots, trees, forests, fruit crops, flowering plants, turf, and ornamental plants. Application may occur before planting, during planting, during the vegetative stage, or after planting to improve adhesion of the agricultural spray. In embodiments, the sticker adjuvant enhances retention and adhesion of the agricultural spray to plant or soil surfaces, thereby improving rainfastness and reducing runoff.

Agricultural Chemical: The agricultural compositions include agricultural chemicals selected from the group of pesticides, growth regulators, micronutrients, and fertilizers. Pesticides include herbicides, insecticides, fungicides, rodenticides, bactericides, nematicides, algaecides, or mixtures thereof.

Examples of herbicides, include bicyclopyrone, mesotrione, fomesafen, glyphosate, tralkoxydim, napropamide, propanil, flamprop M, 2,4-D, MCPA, mecoprop, clodinafop-propargyl, cyhalofop-butyl, diclofop methyl, haloxyfop, quizalofop-P, isoxaben, tebutam, chlorthal dimethyl, benfuresate, dicamba, dichlobenil, benazolin, asulam, phenmedipham, acetochlor, alachlor, metolachlor, pretilachlor, thenylchlor, alloxydim, butroxydim, clethodim, cycloxydim, sethoxydim, tepraloxydim, pendimethalin, dinoterb, bifenox, oxyfluorfen, acifluorfen, fluoroglycofen-ethyl, bromoxynil, ioxynil, imazamethabenz-methyl, imazapyr, imazaquin, imazethapyr, imazapic, imazamox, flumioxazin, flumiclorac-pentyl, picloram, amodosulfuron, chlorsulfuron, nicosulfuron, rimsulfuron, triasulfuron, triallate, pebulate, prosulfocarb, molinate, atrazine, simazine, cyanazine, ametryn, prometryn, terbuthylazine, terbutryn, sulcotrione, isoproturon, linuron, fenuron, chlorotoluron, metoxuron and mixtures thereof.

Examples of fungicides include isopyrazam, mandipropamid, azoxystrobin, trifloxystrobin, kresoxim methyl, famoxadone, metominostrobin and picoxystrobin, triazoxide, cyprodanil, carbendazim, thiabendazole, dimethomorph, vinclozolin, iprodione, dithiocarbamate, imazalil, prochloraz, fluquinconazole, epoxiconazole, flutriafol, azaconazole, bitertanol, bromuconazole, cyproconazole, difenoconazole, hexaconazole, paclobutrazole, propiconazole, tebuconazole, triadimefon, triticonazole, fenpropimorph, tridemorph, fenpropidin, mancozeb, metiram, chlorothalonil, thiram, ziram, captafol, captan, folpet, fluazinam, flutolanil, carboxin, metalaxyl, bupirimate, ethirimol, dimoxystrobin, fluoxastrobin, orysastrobin, metominostrobin and prothioconazole.

Examples of insecticides include pyrethroids such as lambda-cyhalothrin, cypermethrin, and deltamethrin; organophosphates such as malathion and chlorpyrifos; neonicotinoids such as imidacloprid, clothianidin, and thiamethoxam; carbamates such as carbaryl and methomyl; and insect growth regulators such as methoprene and pyriproxyfen. In embodiments, the insecticide is selected from the group of thiamethoxam, imidacloprid, acetamiprid, clothianidin, dinotefuran, nitenpyram, fipronil, abamectin, emamectin, bendiocarb, carbaryl, fenoxycarb, isoprocarb, pirimicarb, propoxur, xylylcarb, endosulfan, heptachlor, tebufenozide, bensultap, diethofencarb, pirimiphos methyl, aldicarb, methomyl, cyprmethrin, bioallethrin, deltamethrin, lambda cyhalothrin, cyhalothrin, cyfluthrin, fenvalerate, imiprothrin, permethrin and halfenprox.

Growth regulators usable in combination with the sticker adjuvant include auxins, cytokinins, gibberellins, ethylene-releasing agents, and growth-inhibiting compounds. Examples include ethephon, gibberellic acid ($GA_3$), $GA_{4+7}$, indole-3-acetic acid (IAA), indole-3-butyric acid (IBA), naphthaleneacetic acid (NAA), paclobutrazol, trinexapac-ethyl, chlormequat chloride, Uniconazole-P, and mixtures thereof.

Micronutrients suitable for use include trace-element salts, chelates, complexes, and organic micronutrient formulations. Examples include micronutrient sources of iron (Fe), manganese (Mn), zinc (Zn), copper (Cu), boron (B), molybdenum (Mo), and cobalt (Co), provided in the form of sulfates, nitrates, chlorides, EDTA chelates, amino-acid chelates, lignosulfonate complexes, or mixtures thereof.

Fertilizers that may be present in the agricultural spray include nitrogen-based, phosphorus-based, potassium-based, or multi-nutrient formulations. Examples include urea, ammonium sulfate, ammonium nitrate, urea-ammonium nitrate (UAN), monoammonium phosphate (MAP), diammonium phosphate (DAP), potassium chloride, potassium nitrate, potassium sulfate, liquid NPK blends, slow-release nitrogen sources, and mixtures thereof.

Analytical Methods:

Determination of Component Weight Percentages: The weight percent of the mixture of polyterpene oligomer and distilled tall oil, the surfactant system, and any optional additives in the sticker adjuvant composition is determined gravimetrically. A representative sample (W_total) is dried under reduced pressure at 50-60°C to obtain a non-aqueous fraction (W_non-aqueous). The non-aqueous fraction is partitioned between a nonpolar solvent (for example, hexane) and a polar solvent (for example, methanol or an isopropanol/water mixture). The polyterpene oligomer and distilled tall oil partition into the nonpolar phase, while the surfactant partitions into the polar phase. After solvent removal, the residue masses (W_oil, W_surfactant, and any undissolved material W_optional) are recorded and expressed as wt.% of the original sample.

Determination of Polyterpene Oligomer : Distilled Tall Oil Ratio: The ratio of polyterpene oligomer to distilled tall oil in the oil mixture is determined by alkaline saponification and phase separation. The oil fraction (W_oil) is dissolved in a nonpolar solvent and extracted with aqueous alkali to convert fatty acids and rosin acids into their carboxylate salts. The organic phase, containing the polyterpene oligomer, is isolated, dried, and concentrated to give W_polyterpene. The aqueous phase is acidified, extracted with a nonpolar solvent, and concentrated to afford the distilled tall oil acid fraction (W_DTO). The mass ratio of polyterpene oligomer to distilled tall oil is then calculated as W_polyterpene : W_DTO.

Polyterpene Oligomer Molecular Weight Distribution (Mn, Mw, Mz, PDI): The number average molecular weight (Mn), weight average molecular weight (Mw), z-average molecular weight (Mz), and polydispersity index (PDI) of the polyterpene oligomer are determined by size exclusion chromatography (SEC) or gel permeation chromatography (GPC). The isolated polyterpene oligomer is dissolved in tetrahydrofuran (or another suitable eluent) and analyzed on an SEC column set calibrated with polystyrene standards. Mn, Mw, and Mz are calculated from the chromatogram, and the PDI is calculated as Mw/Mn.

Determination of $\alpha$-Pinene : $\beta$-Pinene Unit Ratio in the Polyterpene Oligomer: The relative amounts of $\alpha$-pinene-derived units and $\beta$-pinene-derived units in the polyterpene oligomer are determined by nuclear magnetic resonance (NMR) spectroscopy, gas chromatography (GC), or gel permeation chromatography (GPC). In the NMR method, the oligomer is dissolved in $CDCl_3$ and analyzed by $^1H$ and/or $^{13}C$ NMR to quantify signals specific to $\alpha$-pinene-derived and $\beta$-pinene-derived repeat units. Their integral ratio provides the $\alpha$-pinene : $\beta$-pinene weight ratio. Alternatively, thermal depolymerization followed by GC-FID or GC-MS analysis may be used to quantify the $\alpha$-pinene and $\beta$-pinene-derived species.

Distilled Tall Oil Composition: Fatty Acids vs. Rosin Acids: The relative amounts of fatty acids and rosin acids in distilled tall oil are determined by saponification followed by chromatographic analysis. The tall oil fraction is saponified with alcoholic KOH, acidified, and extracted into a nonpolar solvent. The recovered acid mixture is analyzed by GC-FID or HPLC-UV to distinguish fatty acids from rosin acids based on retention times and, if required, mass spectral data. The total fatty acid content and total rosin acid content are expressed as wt.% of the distilled tall oil.

Fatty Acid Species: The fatty acid composition of the distilled tall oil is determined by fatty acid methyl ester (FAME) analysis. The fatty acid fraction is converted to methyl esters by transesterification and analyzed by GC-FID. Peaks corresponding to C18:1 fatty acids (including oleic acid, and other C18:1 isomers), C18:2 fatty acids (including linoleic acid and other C18:2 isomers), conjugated C18:2 species, and other fatty acids are identified and quantified using calibration standards. The C18:1 fatty acid content is calculated as the sum of all mono-unsaturated C18 species containing one double bond. The C18:2 fatty acid content is calculated as the sum of all C18 species containing two double bonds, including both conjugated and non-conjugated isomers. The unsaturated fatty acid content is calculated as the combined total of mono-unsaturated and poly-unsaturated fatty acids.

Rosin Acid Species: The rosin acid composition of the distilled tall oil is determined by HPLC-UV or GC using conditions that separate pimaric-type acids, PAN and abietic-type (including palustric and neoabietic isomers), and dehydroabietic and dihydroabietic acids. Peak areas, corrected for response factors, are used to quantify pimaric acid, PAN and related abietic-type acids, and dehydroabietic and dihydroabietic acids.

Determination of Myrcene Units in the Polyterpene Oligomer: The presence and amount of polymerized myrcene units in the polyterpene oligomer may be determined using nuclear magnetic resonance (NMR) spectroscopy, pyrolysis gas chromatography-mass spectrometry (GC-MS), gas chromatography with flame ionization detection (GC-FID), or gel permeation chromatography (GPC). In the preferred method, $^1H$ and/or $^{13}C$ NMR spectra are collected in $CDCl_3$, and myrcene-derived units are identified by their characteristic olefinic and allylic resonances, which are distinguishable from the resonances of $\alpha$-pinene- and $\beta$-pinene-derived units. Integration of these diagnostic signals provides the weight percent of polymerized myrcene units. As an alternative approach, the polyterpene oligomer may be subjected to pyrolysis GC-MS, where thermal cracking produces fragments with mass spectral features characteristic of myrcene-derived structures. In another alternative method, partial depolymerization followed by GC-FID analysis generates low-molecular-weight oligomers containing identifiable myrcene-based skeletons. Using these methods, the polyterpene oligomer of the invention is determined to contain up to 5 wt.% polymerized myrcene units, based on the total weight of the oligomer.

Rainfastness Adhesion: Rainfastness adhesion is determined according to the dipping procedure described in the Examples (modified ASTM STP1579). Briefly, a diluted sticker adjuvant (0.25-3% v/v in water) is applied to a substrate, dried to constant mass, subjected to 100 water-dipping cycles, re-dried, and the remaining mass is used to calculate adhesion (%).

Determination of Sticker Adjuvant Concentration in Agricultural Sprays: The weight percent of sticker adjuvant in an agricultural spray is determined from the mass of sticker adjuvant introduced into the tank mix relative to the total mass of the final spray composition. A known mass of sticker adjuvant (W_adjuvant) is added to the spray tank, and the total mass of the spray mixture (W_total) is recorded. The concentration of sticker adjuvant in the agricultural spray is calculated as (W_adjuvant / W_total) × 100. Agricultural spray compositions of the invention contain from 0.05 to 3% v/v of the sticker adjuvant.

Identification of Agricultural Chemical Class: The agricultural chemical present in the composition or spray is identified by standard analytical methods such as LC-MS, GC-MS, FTIR, or UV-visible spectroscopy, or alternatively by reference to the label or formulation disclosure.

Examples: The following illustrative examples are non-limiting. The following test methods were employed: Viscosity is measured at 25°C (unless otherwise indicated) according to ASTM D2196 using a rotational (Brookfield-type) viscometer.

The acid value of distilled tall oil (DTO), the polyterpene oligomer, and the sticker blends were determined in accordance with ASTM D465.

Percent Non-volatiles: The non-volatile matter of sticker components was determined using a modified version of ASTM E2043. An aluminum pan was dried in an oven for at least one hour and then cooled to ambient temperature in a desiccator. The mass of the dried pan was recorded. A sample of the sticker component ($\leq$ 2 g) was added to the preweighed pan, and the combined mass was recorded. The pan and sample were placed in an oven at 50°C for 16 hours. After heating, the pan was cooled to ambient temperature in a desiccator and reweighed. The non-volatile matter (wt.%) was calculated as: Non-volatile matter (wt.%) = [(mass after heating) / (initial mass of sample)] × 100.

The sticker components used in the sticker adjuvant are listed below.

Sticker 1: distilled tall oil with an acid number of 190 mg KOH/g and comprising 27% rosin acid. The fatty acid and rosin acid composition includes: C18:1 fatty acids: 50.4 wt.%, C18:2 fatty acids: 7.4 wt.%, conjugated linoleic acids: 0.2 wt.%, unsaturated fatty acids (total): 58.5 wt.%, pimaric acids: 2.5 wt.%, PAN and abietic-type acids: 21.8 wt.%, dehydroabietic + dihydroabietic acids: 6.5 wt.%. GPC analysis indicates a Mn of 401, a Mw of 448, a Mz of 524, a PDI of 1.119. The viscosity is ~137 cP at 25°C (ASTM D2196).

Sticker 2: distilled tall oil with an acid number of 188 mg KOH/g and comprising approximately 30 wt.% rosin acids. The fatty acid and rosin acid composition includes: C18:1 fatty acids: 21.8 wt.%, C18:2 fatty acids: 16.1 wt.%, conjugated linoleic acids: 8.2 wt.%, unsaturated fatty acids (total): 59.5 wt.%, pimaric acids: 14.3 wt.%, PAN and abietic-type acids: 13.9 wt.%, dehydroabietic + dihydroabietic acids: 5.8 wt.%. GPC analysis indicates a Mn of 388, a Mw of 432, a Mz of 496, a PDI of 1.115. The viscosity is ~137 cP at 25°C (ASTM D2196).

Sticker 3: distilled tall oil with an acid value of 183 mg KOH/g and comprising approximately 33 wt.% rosin acids. The fatty acid and rosin acid composition includes: C18:1 fatty acids: 3.1 wt.%, C18:2 fatty acids: 2.9 wt.%, conjugated linoleic acids: 5.2 wt.%, unsaturated fatty acids (total): 22.1 wt.%, pimaric acids: 17.2 wt.%, PAN and abietic-type acids: 13.5 wt.%, dehydroabietic + dihydroabietic acids: 6.5 wt.%. GPC analysis indicates a Mn of 415, a Mw of 517, a Mz of 704, a PDI of 1.247. The viscosity is ~554 cP at 25°C (ASTM D2196).

Sticker 4: polyterpene oil comprising polymerized units of α-pinene and β-pinene in a weight ratio of 1:4 to 4:5, with remainder being ~5 wt.% di-pentene, and ~5 wt.% myrcene and other components; having 12 wt.% monomer, 79 wt.% dimer, 5 wt.% trimer, 4 wt.% tetramer, and 1 wt.% pentamer and higher oligomers; a Mn of 240, a Mw of 250, a Mz of 265, a PDI of 1.044, and a viscosity of 227 cP.

Sticker 5: polyterpene oil comprising polymerized units of α-pinene and β-pinene in a weight ratio of 5:2 to 17:2, with remainder ~5-10 wt.% being myrcene and other components; having 6 wt.% monomer, 68 wt.% dimer, 12 wt.% trimer, 10 wt.% tetramer, and 4 wt.% pentamer and higher oligomers; a Mn of 261, a Mw of 282, a Mz of 311, a PDI of 1.078, and a viscosity of 276 cP.

Sticker 6: polyterpene oligomer comprising polymerized units of α-pinene and β-pinene in a weight ratio of 15.33:1, with remainder < 5 wt.% being myrcene and other components; having 2.5 wt.% monomer, 32 wt.% dimer, 23 wt.% trimer, 16 wt.% tetramer, and 25 wt.% pentamer and higher oligomers; a Mn of 341, a Mw of 446, a Mz of 610, a PDI of 1.31, and a viscosity of 11,130 cP (at 50°C).

Sticker 7: polyterpene oligomer comprising polymerized units of α-pinene and β-pinene in a weight ratio of 49:1, with remainder < 3 wt.% being myrcene and other components; having 0 wt.% monomer, 62 wt.% dimer, 30 wt.% trimer, and 8 wt.% pentamer and higher oligomers; a Mn of 287, a Mw of 313, a Mz of 350, a PDI of 1.093, and a viscosity of 2,416 cP.

Sticker 8: polyterpene oil comprising polymerized units of $\alpha$-pinene and $\beta$-pinene in a weight ratio of 49:1, with remainder being < 3 wt.% myrcene and other components; having 0 wt.% monomer, 88 wt.% dimer, 7 wt.% trimer, 4 wt.% tetramer, and 1 wt.% pentamer and higher oligomers; a Mn of 247, a Mw of 257, a Mz of 270, a PDI of 1.038 , and a viscosity of 374 cP.

Sticker 9: is a mixture of Sticker 6 and Sticker 4 in a ratio of 35:65, having a viscosity of 2,250 cP, and a non-volatile content of 95.65 wt.%.

Sticker 10: is a mixture of Sticker 6 and Sticker 5 in a ratio of 25:75, having a viscosity of 1,821 cP, and a non-volatile content of 97.04 wt.%.

Sticker 11: is a mixture of Sticker 6 and alpha pinene in a ratio of 60:40, having a viscosity of 29 cP.

Sticker 12: is a mixture of Sticker 6 and limonene in a ratio of 60:40, having a viscosity of 10 cP, and a non-volatile content of 57.13 wt.%.

Sticker 13: is a mixture of Sticker 6 and Sticker 3 in a ratio of 35:65, having an acid value of 109 mg KOH/g, a viscosity of 1,318 cP, and a non-volatile content of 99.04 wt.%.

Sticker 14: is a mixture of Sticker 6 and Sticker 3 in a ratio of 60:40, having an acid value of 70 mg KOH/g, a viscosity of 2,600 cP, and a non-volatile content of 98.53 wt.%.

Sticker 15: is a mixture of Sticker 6, Sticker 3, and Sticker 4 in a ratio of 40:40:20, having an acid value of 68 mg KOH/g, a viscosity of 2,380 cP, and a non-volatile content of 96.72 wt.%.

Sticker 16: is a mixture of Sticker 6, Sticker 3, and Sticker 5 in a ratio of 35:35:30, having an acid value of 62 mg KOH/g, a viscosity of 2,200 cP, and a non-volatile content of 96.48 wt.%.

Sticker 17: is a mixture of Sticker 6 and a synthetic DTO consisting of blend of tall oil fatty acid and tall oil rosin in a ratio of 60:40 , having an acid value of 138 mg KOH/g, a viscosity of 1890 cP, and a non-volatile content of 98.35 wt.%.

Sticker 18: a mixture of Sticker 6 and Sticker 2 in a ratio of 25:75, having an acid value of 77 mg KOH/g, a viscosity of 245 cP, and a non-volatile content of 99.43 wt.%.

Sticker 19: fatty acid methyl ester, having an acid value of 4.4 mg KOH/g, a viscosity of 6 cP, and a non-volatile content of 98.74 wt.%.

Sticker 20: light paraffin oil has a viscosity of 20.5 cP (at 40°C), and a non-volatile content of ~100 wt.%.

Sticker 21: no sticker.

The surfactant used was polyoxyethylene nonylphenol, a nonionic surfactant.

Sticker Adjuvant Preparation: Sticker adjuvants were prepared by blending 90 wt.% of the selected sticker component with 10 wt.% of the surfactant at room temperature until homogeneous. Each sticker adjuvant was diluted with water to form a 10% v/v diluted sticker adjuvant for adhesion (rainfastness) testing. The diluted mixtures were stirred for approximately three minutes to ensure uniform dispersion.

Adhesion (Rainfastness) Testing: The adhesion efficacy of each 10% v/v diluted sticker adjuvant was measured using a modified version of the ASTM STP 1579 procedure. The diluted sticker adjuvant was pipetted onto a strip of parafilm wax (1 x 3 in) whose mass had been taken and recorded. A pipetted "dot" (200 uL) of diluted sticker adjuvant was then set to dry for 72 hours. The mass of the dried dot and the parafilm was recorded and set to dry for another 24 hours. The dried dot and parafilm were weighed and recorded once more to ensure there had not been more than a 5% mass loss between recordings. A beaker of water was filled and placed under a dip coater. The dried dots were then attached to the dip coater with the "dot" end of the parafilm hovering just over the surface of the water. Using the dipping program, the dots were dipped 100 times. Once finished, the parafilm and dot were set to dry for another 72 hours. Once dry, the mass of the dot and parafilm were recorded and the percent adhesion was calculated by taking the difference of the drop before and after dipping. Each sample was run in triplicate, and the average percent adhesion was reported in Table 2 below.

Table 2 - Rainfastness (Adhesion) Data

| Sticker Adjuvant Containing: | Summary of Sticker Component | Adhesion, % |
|---|---|---|
| Sticker 1 | distilled tall oil | 72.7 |
| Sticker 2 | distilled tall oil | 87.1 |
| Sticker 3 | distilled tall oil | 99.1 |
| Sticker 4 | polvterpene oil | 81.9 |
| Sticker 5 | polyterpene oil | 82.2 |
| Sticker 6 | polyterpene oligomer | 87.9 |
| Sticker 7 | polyterpene oligomer | 80.8 |

(continued)

| Sticker Adjuvant Containing: | Summary of Sticker Component | Adhesion, % |
|---|---|---|
| Sticker 8 | polyterpene oil | 82.2 |
| Sticker 9 | is a mixture of Sticker 6 and Sticker 4 in a ratio of 35:65 | 84.7 |
| Sticker 10 | is a mixture of Sticker 6 and Sticker 5 in a ratio of 25:75 | 85.7 |
| Sticker 11 | is a mixture of Sticker 6 and alpha pinene in a ratio of 60:40 | 78.7 |
| Sticker 12 | is a mixture of Sticker 6 and limonene in a ratio of 60:40 | 79.2 |
| Sticker 13 | is a mixture of Sticker 6 and Sticker 3 in a ratio of 35:65 | 95.5 |
| Sticker 14 | is a mixture of Sticker 6 and Sticker 3 in a ratio of 60:40 | 94.2 |
| Sticker 15 | is a mixture of Sticker 6, Sticker 3, and Sticker 4 in a ratio of 40:40:20 | 92.7 |
| Sticker 16 | is a mixture of Sticker 6, Sticker 3, and Sticker 5 in a ratio of 35:35:30 | 90.4 |
| Sticker 17 | is a mixture of Sticker 6 and a synthetic DTO consisting of blend of tall oil fatty acid and tall oil rosin in a ratio of 60:40 | 96.0 |
| Sticker 18 | a mixture of Sticker 6 and Sticker 2 in a ratio of 25:75 | 96 |
| Sticker 19 | fatty acid methyl ester | 66.8 |
| Sticker 20 | light paraffin oil | 89.4 |
| Sticker 21 | no sticker | 7.0 |

The sticker adjuvants were evaluated for rainfastness at a 10% v/v dilution. For these polyterpene/DTO systems, adhesion is governed primarily by deposition and formation of a continuous hydrophobic film after water evaporation. Once sufficient film formation occurs, adhesion is not expected to vary linearly with concentration within the typical agricultural use range. Accordingly, the rainfastness performance observed at 10% v/v is expected to be representative of performance at volumetric dilution rates used in agricultural spray applications, such as 0.25-3% v/v.

Rainfastness Performance at 1% v/v Sticker Adjuvants (Stickers 13-18)

Sticker adjuvants containing Stickers 13-18 are prepared by diluting each sticker adjuvant to 1% v/v in deionized water using the same mixing procedure described for the 10% v/v evaluations. It is expected that the 1% v/v diluted sticker adjuvants will have a rainfastness adhesion % of at least 85%, when evaluated by the same rainfastness test method (ASTM STP 1579).

## Claims

1. A sticker adjuvant composition comprising, based on the total weight of the composition:

    50-100 wt.% of a sticker component comprising a mixture of polyterpene oligomer and distilled tall oil in a weight ratio of 1:4 to 4:1;
    1-50 wt.% of a surfactant system; and
    0-20 wt.% of one or more additives selected from the group of solvents, diluents, carriers, stabilizing agents, antioxidants, preservatives, biocides, pH modifiers, chelating agents, rheology modifiers, viscosity modifiers, freeze-point depressants, pour-point depressants, defoamers, antifoaming agents, additional surfactants, emulsifiers, wetting agents, drift-reduction agents, deposition aids, and combinations thereof;

    wherein the polyterpene oligomer comprises polymerized units of $\alpha$-pinene and $\beta$-pinene in a weight ratio of 4:1 to 19:1, the polyterpene oligomer having:

        a Mn of 320-375 Da;

a Mw of 350-700 Da;
a Mz of 400-800 Da; and
a PDI of 1.10-1.5;
all as measured by gel permeation chromatography (GPC) in tetrahydrofuran (THF) using polystyrene calibration standards;

wherein the distilled tall oil comprises 40-90 wt.% fatty acids and 10-60 wt.% rosin acids, the distilled tall oil having:

C18:1 fatty acid content of 2-30 wt.%;
C18:2 fatty acid content of 2-20 wt.%;
conjugated linoleic content of 2-30 wt.%;
unsaturated fatty acid content of 10-75 wt.%;
pimaric acid content of 5-25 wt.%;
PAN and other abietic content of 5-25 wt.%; and
dehydroabietic acid and dihydroabietic acid content of 3-15 wt.%;
all as determined by fatty acid methyl ester (FAME) GC-FID analysis and GC-FID rosin acid analysis;

wherein the sticker adjuvant composition when added to water in an amount of 0.25-3% v/v has a rainfastness adhesion percentage of at least 85%, or at least 88%, or at least 90%, as measured according to ASTM STP 1579.

2. The sticker adjuvant composition of claim 1, wherein the sticker adjuvant composition has a viscosity of 50-2,500 cP, measured at 25°C per ASTM D2196.

3. The sticker adjuvant composition of any of claims 1-2, wherein the polyterpene oligomer comprises:

monomers in an amount of 0.1-5 wt.%;
dimers in an amount of 25-55 wt.%;
trimers in an amount of 10-35 wt.%;
tetramers in an amount of 10-25 wt.%; and
pentamers and higher oligomers in an amount of 10-40 wt.%,
all based on the total weight of the polyterpene oligomer.

4. The sticker adjuvant composition of any of claims 1-3, wherein the polyterpene oligomer has:

a Mn of 340-355 Da;
a Mw of 350-600 Da;
a Mz of 500-700 Da; and
a PDI of 1.15-1.4.

5. The sticker adjuvant composition of any of claims 1-4, wherein the distilled tall oil has:

C18:1 fatty acid content of 2-25 wt.%;
C18:2 fatty acid content of 2-15 wt.%;
conjugated linoleic content of 2-25 wt.%;
unsaturated fatty acid content of 15-75 wt.%;
pimaric acid content of 5-20 wt.%;
PAN and other abietic content of 5-20 wt.%; and
dehydroabietic acid and dihydroabietic acid content of 3-10 wt.%.

6. The sticker adjuvant composition of any of claims 1-5, wherein the sticker component has an acid value of 60-140 mg KOH/g, measured according to ASTM D465.

7. The sticker adjuvant composition of any of claims 1-6, wherein the sticker component has a non-volatile content of 96-100 wt.%, determined according to ASTM E2043.

8. An agricultural concentrate composition comprising, based on the total weight of the agricultural concentrate composition:

1-60 wt.% of an agricultural chemical;
0-20 wt.% of one or more additives; and
0.1-20 wt.% of a sticker adjuvant composition, the sticker adjuvant composition comprising, based on the total weight of the sticker adjuvant composition:

50-100 wt.% of a sticker component comprising a mixture of polyterpene oligomer and distilled tall oil in a weight ratio of 1:4 to 4:1;
1-50 wt.% of a surfactant system; and
0-20 wt.% of one or more additives selected from the group of solvents, diluents, carriers, stabilizing agents, antioxidants, preservatives, biocides, pH modifiers, chelating agents, rheology modifiers, viscosity modifiers, freeze-point depressants, pour-point depressants, defoamers, antifoaming agents, additional surfactants, emulsifiers, wetting agents, drift-reduction agents, deposition aids, and combinations thereof;

wherein the polyterpene oligomer comprises polymerized units of $\alpha$-pinene and $\beta$-pinene in a weight ratio of 4:1 to 19:1, the polyterpene oligomer having:

a Mn of 320-375 Da;
a Mw of 350-700 Da;
a Mz of 400-800 Da; and
a PDI of 1.10-1.5;
all as measured by gel permeation chromatography (GPC) in tetrahydrofuran (THF) using polystyrene calibration standards;

wherein the distilled tall oil comprises 40-90 wt.% fatty acids and 10-60 wt.% rosin acids, the distilled tall oil having:

C18:1 fatty acid content of 2-30 wt.%;
C18:2 fatty acid content of 2-20 wt.%;
conjugated linoleic content of 2-30 wt.%;
unsaturated fatty acid content of 10-75 wt.%;
pimaric acid content of 5-25 wt.%;
PAN and other abietic content of 5-25 wt.%; and
dehydroabietic acid and dihydroabietic acid content of 3-15 wt.%;
all as determined by fatty acid methyl ester (FAME) GC-FID

analysis and GC-FID rosin acid analysis;

wherein the agricultural concentrate composition is configured to be diluted with water prior to use.

9. The agricultural concentrate composition of claim 8, wherein the sticker adjuvant composition has a viscosity of 50-2,500 cP, measured at 25°C per ASTM D2196.

10. The agricultural concentrate composition of any of claims 8-9, wherein the polyterpene oligomer comprises:

monomers in an amount of 0.1-5 wt.%;
dimers in an amount of 25-55 wt.%;
trimers in an amount of 10-35 wt.%;
tetramers in an amount of 10-25 wt.%; and
pentamers and higher oligomers in an amount of 10-40 wt.%, based on the total weight of the polyterpene oligomer.

11. The agricultural concentrate composition of any of claims 8-10, wherein the polyterpene oligomer has:

a Mn of 340-355 Da;
a Mw of 350-600 Da;
a Mz of 500-700 Da; and
a PDI of 1.15-1.4.

12. The agricultural concentrate composition of any of claims 8-11, wherein the agricultural chemical is selected from pesticides, growth regulators, micronutrients, fertilizers, and mixtures thereof.

13. The agricultural concentrate composition of any of claims 8-12, wherein the agricultural concentrate composition is diluted with water to provide an agricultural spray composition comprising 0.25-3% v/v of the sticker adjuvant composition.

14. The agricultural concentrate composition of claim 13, wherein the agricultural spray composition exhibits a rainfast adhesion percentage of at least 85%, or at least 88%, or at least 90%, as measured according to ASTM STP 1579.

15. The agricultural concentrate composition of any of claims 8-14, wherein the sticker adjuvant composition is present in an amount of 0.25-15 wt.%, based on the total weight of the agricultural concentrate composition.

Europäisches
Patentamt
European
Patent Office
Office européen
des brevets

## EUROPEAN SEARCH REPORT

**Application Number**

EP 25 22 4269

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2020/226825 A1 (INGEVITY SOUTH CAROLINA LLC [US]) 12 November 2020 (2020-11-12) * claims 1, 8-9 * | 1-15 | INV. A01N25/24 |
| A | WO 2023/058011 A2 (SEEDLINGS INDIA PRIVATE LTD [IN]) 13 April 2023 (2023-04-13) * page 17, lines 20-28; examples 4-5 * | 1-15 | |
| A | WO 2024/126767 A1 (ACTION PIN [FR]) 20 June 2024 (2024-06-20) * page 7, lines 8-9; claims 1, 16 * | 1-15 | |
| A | WO 99/65998 A2 (ATO FINDLEY INC [US]) 23 December 1999 (1999-12-23) * claim 9 * | 1-15 | |

**TECHNICAL FIELDS SEARCHED (IPC)**

A01N

The present search report has been drawn up for all claims

| Place of search | Date of completion of the search | Examiner |
|---|---|---|
| Munich | 14 April 2026 | Lorusso, Patrizia |

EPO FORM 1503 03.82 (P04C01)

## ANNEX TO THE EUROPEAN SEARCH REPORT
## ON EUROPEAN PATENT APPLICATION NO.

EP 25 22 4269

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2026

| Patent document cited in search report | | | Publication date | Patent family member(s) | | | Publication date |
|---|---|---|---|---|---|---|---|
| WO 2020226825 | A1 | | 12-11-2020 | BR | 112021022034 | A2 | 28-12-2021 |
| | | | | CN | 114071996 | A | 18-02-2022 |
| | | | | EP | 3962271 | A1 | 09-03-2022 |
| | | | | US | 2020345004 | A1 | 05-11-2020 |
| | | | | WO | 2020226825 | A1 | 12-11-2020 |
| WO 2023058011 | A2 | | 13-04-2023 | NONE | | | |
| WO 2024126767 | A1 | | 20-06-2024 | EP | 4633370 | A1 | 22-10-2025 |
| | | | | WO | 2024126767 | A1 | 20-06-2024 |
| WO 9965998 | A2 | | 23-12-1999 | AU | 756817 | B2 | 23-01-2003 |
| | | | | BR | 9911264 | A | 13-03-2001 |
| | | | | EP | 1090084 | A2 | 11-04-2001 |
| | | | | ES | 2336392 | T3 | 12-04-2010 |
| | | | | US | 2003113519 | A1 | 19-06-2003 |
| | | | | WO | 9965998 | A2 | 23-12-1999 |

EPO FORM P0459

For more details about this annex : see Official Journal of the European Patent Office, No. 12/82